# FASCICULE DE BREVET EUROPEEN

(11) **EP 1 976 743 B1**
(45) Date de publication et mention de la délivrance du brevet: **05.05.2010**
(21) Numéro de dépôt: 06831645.4
(22) Date de dépôt: 05.12.2006
(51) Int. Cl.: B62D 37/00, B64C 21/02, F15D 1/06, F15D 1/12

(54) **DISPOSITIF REDUISANT LA TRAINEE DUE AU DEPLACEMENT RELATIF D'UN CORPS ET D'UN FLUIDE**
VORRICHTUNG ZUR REDUZIERUNG DES DURCH DIE RELATIVE VERSCHIEBUNG EINES KÖRPERS UND EINES FLUIDS ERZEUGTEN WIDERSTANDS
DEVICE FOR REDUCING A DRAG PRODUCED BY THE RELATIVE DISPLACEMENT OF A BODY AND FLUID

(30) Priorité: 06.12.2005 CH 19282005
(43) Date de publication de la demande: 08.10.2008
(73) Titulaire: DRS Drag Reduction Systems SA, Port Louis (MU); MAGISING PTE LTD., Singapore 068897 (SG)
(72) Inventeur: BRULHART, Yvan, CH-1227 Carouge (CH)
(74) Mandataire: Micheli & Cie SA
(86) Numéro de dépôt international: PCT/IB2006/003474
(87) Numéro de publication internationale: WO 2007/066199

(56) Documents cités:
- WO-A-03/013957
- DE-A1- 10 012 905
- GB-A- 729 880
- JP-A- 2001 050 215
- US-A- 2 899 150
- US-B1- 6 363 972

## Description

Lorsqu'un corps est déplacé dans un fluide ou qu'un fluide s'écoule autour ou dans un corps, ce corps est soumis à une pression due à la vitesse du fluide pour contourner le corps ou être confiné dans le corps et à une force agissant dans le sens opposé au déplacement du corps respectivement dans le sens de l'écoulement du fluide. Cette force s'opposant au déplacement du corps dans le fluide ou du fluide dans le corps est la traînée de frottement ou la perte de charge due au frottement. Dans un écoulement laminaire la traînée est relativement faible mais dès que la vitesse relative entre le corps et le fluide augmente l'écoulement devient turbulent tout au moins autour de certaines parties de la surface du corps immergé dans le fluide. Cet écoulement turbulent crée des tourbillons du fluide autour ou le long du corps dont le sens de rotation est tel que la couche de fluide au contact ou à proximité du corps comporte une composante de déplacement dirigée dans le sens contraire du déplacement du corps, respectivement dans le sens de l'écoulement du fluide. Ceci augmente fortement la traînée notamment la traînée de frottement ou la perte de charge de frottement de sorte qu'il faut appliquer à un corps mobile une poussée beaucoup plus grande pour assurer son déplacement ou augmenter la puissance de pompage pour maintenir le débit d'un fluide dans une conduite. Ceci conduit en outre à augmenter les contraintes auxquelles le corps est soumis.

Ce phénomène se retrouve particulièrement pour tout déplacement de véhicules tels que des bateaux dans l'eau ou des voitures, trains et avions dans l'air avec la conséquence d'une dépense d'énergie supplémentaire ou de carburant pour augmenter la poussée et combattre la traînée. Dans le cas de corps immobiles ceux-ci doivent être conçus pour résister à ces efforts et contraintes. Enfin, dans le cas de fluide circulant dans des conduits, ceci peut conduire à des phénomènes de cavitation et nécessite d'augmenter la puissance de pompage pour assurer le débit du fluide.

La présente invention a pour but la réalisation de moyens permettant de créer et de maîtriser le sens de rotation des tourbillons dû à l'écoulement turbulent d'un fluide autour ou dans un corps de manière à réduire les efforts de friction entre une partie au moins de la surface du corps et le fluide, réduisant de ce fait la traînée, les contraintes et la perte de charge.

Pour les constructions fixes, immeubles, ponts, éoliennes, etc. le dispositif selon l'invention permet de diminuer les contraintes dues à l'écoulement des fluides auxquels ils sont soumis et donc de réduire leur fatigue et leur usure.

On connaît des documents US-A-2 899 150; US-B1-6 363 972 et JP 2001 050215 des dispositifs selon le préambule de la revendication 1, tendant à réduire la traînée due au déplacement relatif entre un corps et un fluide comportant, dans ou sur la surface du corps qui se trouve en contact avec le fluide et suivant une ligne située sensiblement dans un plan perpendiculaire à l'écoulement du fluide, des moyens provoquant des tourbillons le long d'au moins une partie de la surface du corps.

Le dispositif selon l'invention réduisant la traînée due au déplacement d'un corps dans un fluide, réduisant les contraintes auxquelles un corps fixe est soumis ou réduisant les pertes de charges dues à l'écoulement d'un fluide dans une conduite, obvie aux inconvénients précités et permet d'atteindre le but énoncé plus haut et se distingue par le fait que lesdits moyens sont constitués par au moins une gorge pratiquée dans la surface du corps qui est en contact avec le fluide et par une arête émergeant de la surface du corps et qui s'étend parallèlement à la gorge, cette arête étant immédiatement en aval de la gorge.

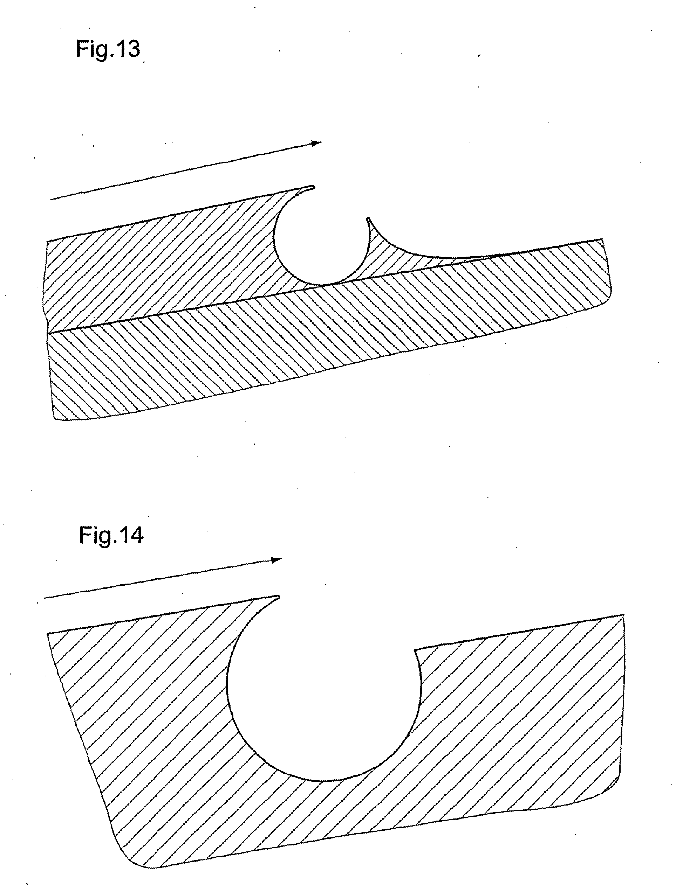

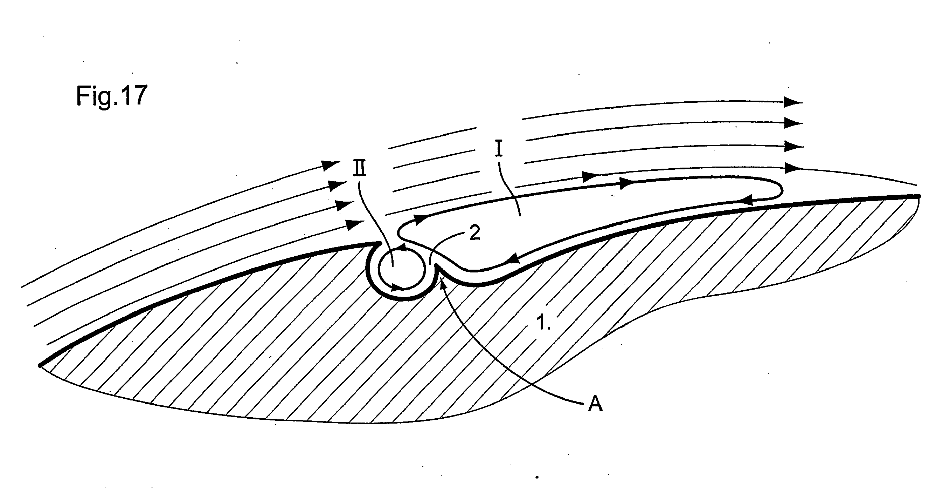

Le dessin annexé illustre d'une part le phénomène d'écoulement turbulent autour d'un corps tel qu'il se présente naturellement et d'autre part tel qu'il se présente autour ou dans un corps équipé du dispositif selon l'invention. L'invention est montrée dans les figures 13 et 17 seulement.
La figure 1 illustre schématiquement l'écoulement turbulent autour d'un corps déplacé dans un fluide, ou d'un fluide se déplaçant autour d'un corps.
La figure 2 illustre schématiquement un corps équipé d'une gorge et l'écoulement modifié qui en résulte.
La figure 3 illustre un corps muni d'une variante des moyens provoquant des tourbillons.
Les figures 4 à 7 illustrent à titre d'exemples non exhaustifs différentes formes que peuvent prendre les moyens provoquant des tourbillons.
La figure 8 illustre un profilé souple, autocollant, muni des moyens provoquant des tourbillons.
La figure 9 illustre un train équipé du dispositif muni des moyens provoquant des tourbillons.
Les figures 10 et 11 illustrent un pont vu de côté et de dessus partiellement en coupe selon la ligne A - A muni des moyens provoquant des tourbillons.
La figure 12 est un schéma d'une ogive munie d'un dispositif de réduction de traînée sur laquelle des tests ont été effectués.
La figure 13 illustre partiellement une ogive sur laquelle a été apposé un dispositif selon la figure 7 et qui a servi de base à des tests d'efficacités.
La figure 14 illustre partiellement une ogive dans laquelle a été ménagé un dispositif selon la figure 7, incrusté dans l'ogive, qui a servi de base à des tests d'efficacités.
La figure 15 illustre une tubulure munie du dispositif incrusté.
La figure 16 illustre une tubulure munie du dispositif rapporté.
La figure 17 illustre le phénomène de recirculation obtenu par le dispositif selon l'invention.

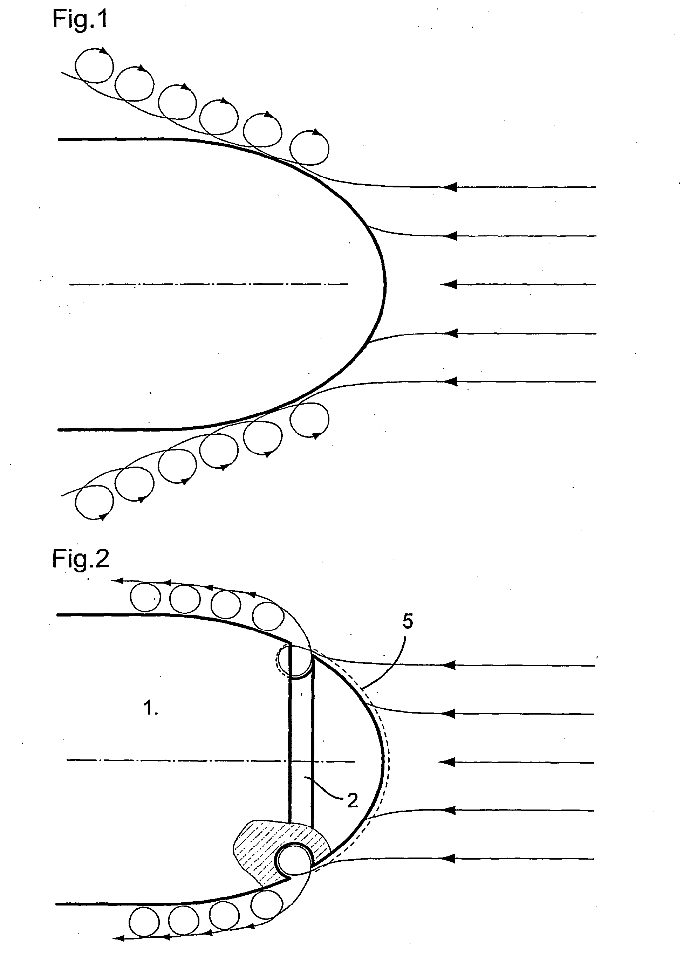

Comme on le voit sur la figure 1 schématiquement lorsqu'un corps se déplace dans un fluide, ou qu'un fluide s'écoule autour de ce corps, lorsque la vitesse relative entre le corps et le fluide augmente s'installe un régime d'écoulement turbulent créant des tourbillons de fluide à grande vitesse dont le sens de rotation est tel que les filets de fluide en contact avec la surface du corps ont une vitesse relative par rapport au corps plus grande que la vitesse de pénétration du corps dans le fluide mais dans la direction opposée. Ceci augmente les forces de friction entre le fluide et le corps et donc la traînée, notamment la traînée de friction.

En outre, ces tourbillons s'écartent du corps, ce qui augmente l'instabilité de l'écoulement le long de la surface dudit corps et provoque un décrochement et donc une traînée plus importante.

La figure 2 illustre un corps 1 muni de moyens 2 permettant de maîtriser et de canaliser notamment le sens de rotation des tourbillons de l'écoulement turbulent autour du corps.

Dans l'exemple illustré, ces moyens 2 sont formés par une gorge s'étendant sur toute la surface immergée du corps 1 dans le fluide et s'étendant de préférence sensiblement perpendiculairement à l'écoulement de fluide. Cette gorge 2 a une forme telle que les filets de fluide en contact avec une partie au moins de la surface du corps 1 arrivant à l'endroit de cette gorge pénètrent dans celle-ci et provoquent un sens de rotation tel des filets de fluide en contact avec le corps en aval du dispositif qu'ils ont une vitesse relative par rapport au corps 1 dirigée dans le sens de déplacement de ce corps, c'est-à-dire opposée à l'écoulement du fluide, le sens de rotation des tourbillons ayant été maîtrisé et canalisé par les moyens 2. Ainsi, les forces de friction entre le fluide et le corps 1 sont réduites et la traînée est diminuée. Le dispositif selon l'invention comportant la gorge 2 a permis d'inverser le sens de rotation des tourbillons et de réduire ainsi la traînée de friction sur une certaine distance au moins en aval de la gorge 2.

De plus, le sens de ces tourbillons tend à recoller l'écoulement de fluide à la surface du corps, retardant le moment du décrochement et diminuant ainsi la traînée.

La position de la gorge 2 par rapport au corps 1 peut varier en fonction notamment de la forme du corps 1 mais cette gorge 2 se situe de préférence à un emplacement du corps situé en amont de l'endroit où se crée normalement la turbulence de la couche limite. Plusieurs gorges 2 peuvent être disposées les unes derrière les autres le long du corps en différents emplacements de celui-ci.

Dans le cas d'un train, d'une voiture ou d'un avion, cette gorge 2 peut être fermée sur elle-même puisque le corps est totalement immergé dans l'air. Par contre dans le cas d'un bateau la gorge 2 peut n'être prévue sur la coque que dans sa partie immergée.

Dans le cas d'un bateau muni d'un bulbe immergé une gorge 2 peut également être pratiquée dans ce bulbe sur toute sa périphérie.

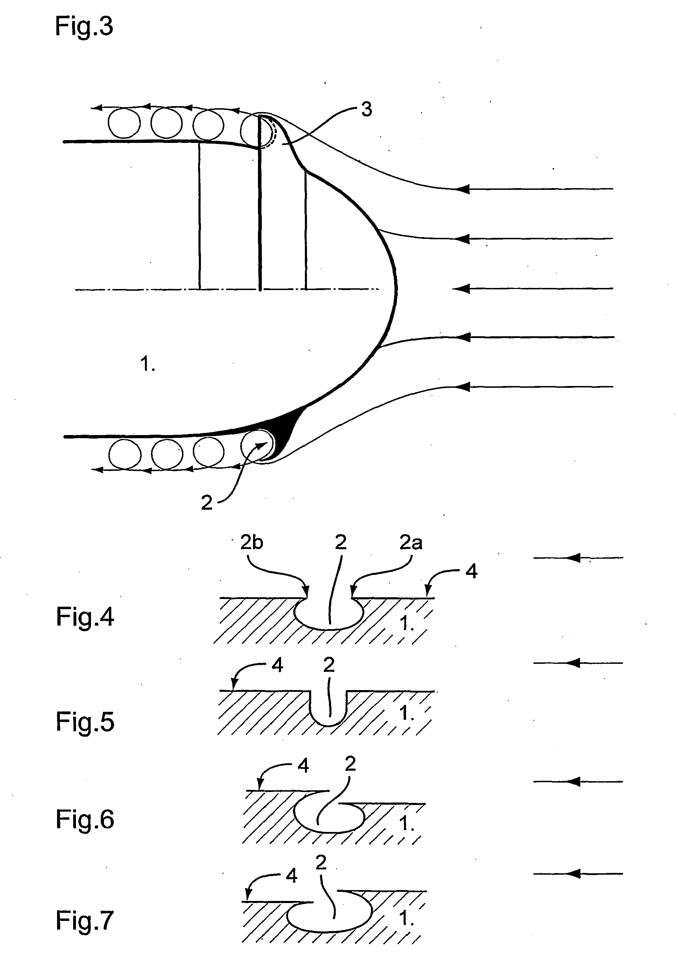

Dans la variante illustrée à la figure 3, le corps 1 est muni d'une protubérance 3 comportant la gorge 2. Cette protubérance peut être venue d'une pièce avec le corps ou être constituée par un profilé fixé sur le corps 1.

Comme on le voit à la figure 2 une zone 5 sur la partie avant du bulbe 1 se recouvre d'une calotte de fluide quasi-stationnaire.

Vue en coupe transversale la forme de la gorge 2 peut varier selon les formes d'exécution comme illustré, à titre d'exemple, schématiquement aux figures 4 à 7.

La variante illustrée à la figure 4 comporte une gorge sensiblement symétrique et dont les bords libres 2a, 2b sont situés dans le prolongement de la surface 4 du corps en déplacement dans le fluide. Dans cette variante la gorge s'étend sur plus de 180° et ses bords libres 2a, 2b sont séparés l'un de l'autre par une distance plus petite que la largeur maximale de la gorge 2.

Dans la variante illustrée à la figure 5 la gorge 2 présente la forme générale d'un U.

Dans les variantes illustrées aux figures 6 et 7 la gorge 2 est dissymétrique en ce sens que l'un de ses bords libres 2a, 2b est décalé par rapport à l'enveloppe externe du corps plongé dans le fluide, ce qui dans certains cas facilite l'écoulement du fluide dans cette gorge.

Dans les variantes des figures 4, 6 et 7 la gorge 2 présente la forme générale d'un C.

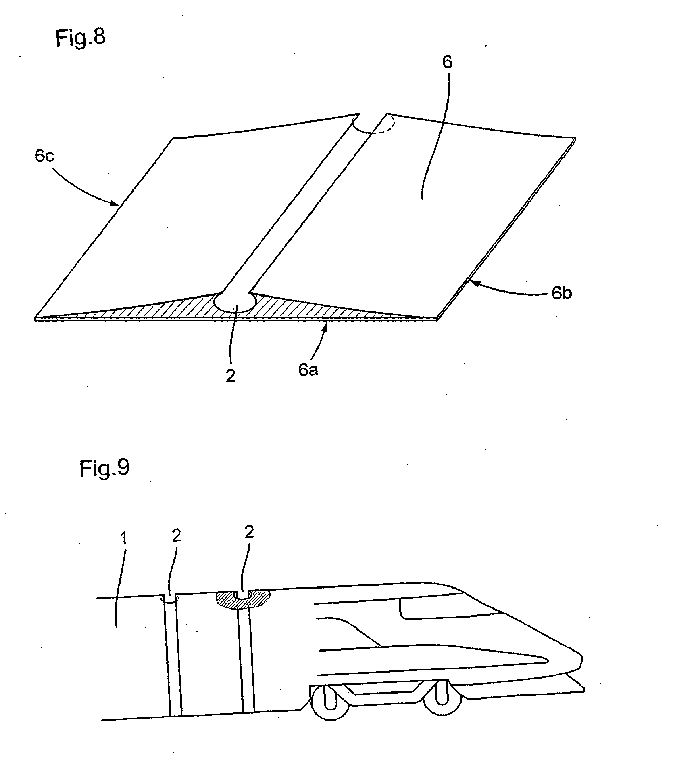

La figure 8 illustre un profilé 6 comportant une face inférieure 6a pouvant être munie d'une couche autocollante protégée par une feuille amovible. Ce profilé présente des bords 6b, 6c minces et effilés et une partie centrale épaisse dans laquelle est formée la gorge 2. Cette forme d'exécution du dispositif de réduction de la traînée est pratique et facile à mettre en oeuvre car elle ne demande pas de modifier la forme de la surface du corps au contact d'un fluide. En effet, il suffit de découper une longueur du profilé 6 correspondant à la périphérie du corps ou de la portion du corps devant être munie du dispositif de réduction de la traînée puis de coller cette longueur de profilé sur la surface du corps, suivant le tracé désiré, généralement perpendiculaire à l'écoulement du fluide, pour munir le corps dudit dispositif de réduction de la traînée formé par la gorge 2.

Le dispositif décrit permet de maîtriser, de régulariser et d'uniformiser l'écoulement du fluide dont la vitesse et la pression deviennent plus stables.

Le résultat obtenu à l'aide du dispositif selon l'invention, est une réduction importante de la traînée à laquelle un corps se déplaçant dans un fluide est soumis. Un tel résultat est très important pour tous les véhicules se déplaçant dans un fluide, bateaux, trains, voitures, avions etc puisque la diminution de la traînée, notamment de la traînée de friction entraîne automatiquement une diminution de l'énergie nécessaire à la propulsion, donc une réduction de consommation de carburant ou une augmentation de la vitesse de déplacement du véhicule.

La présence du dispositif sur un corps en déplacement dans un fluide peut provoquer, comme illustré à la figure 2, la formation d'un film de fluide stable 5 en forme de calotte sur l'avant du corps 1 ce qui réduit également la traînée.

La figure 9 illustre un véhicule terrestre équipé de deux dispositifs 2 selon l'invention l'un derrière l'autre séparé d'une certaine distance. La distance séparant deux dispositifs le long du véhicule est de préférence inférieure à la distance ou se forme la naissance de la couche limite en aval du premier dispositif.

Pour les constructions fixes, immeubles, éoliennes, plates-formes off-shores, ponts et structures de toutes natures le dispositif selon l'invention permet de réduire les contraintes auxquelles ils sont soumis et donc leur fatigue et/ou usure.

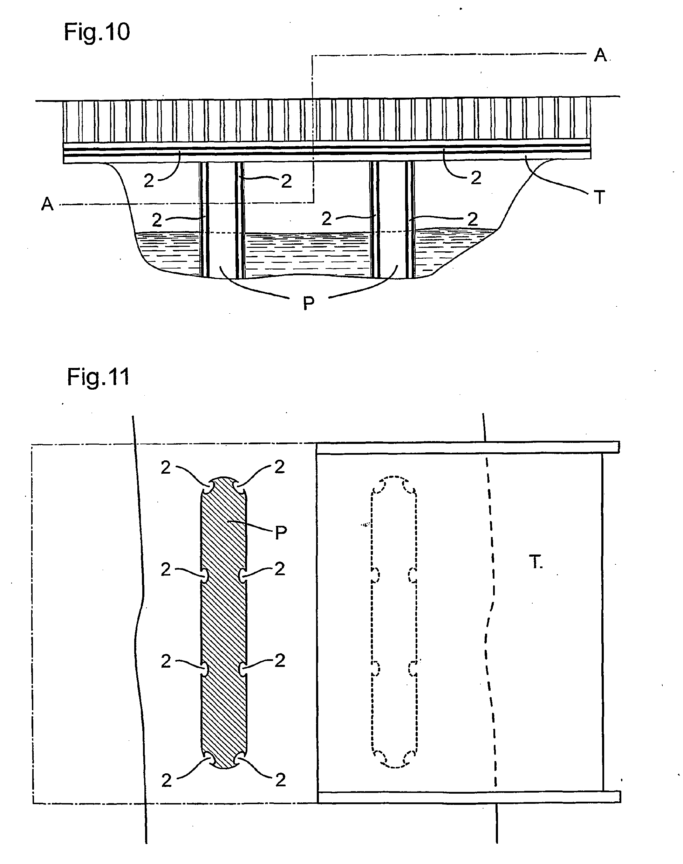

On a représenté à titre d'exemple un pont vu de côté et de dessus aux figures 10 et 11 muni du dispositif selon l'invention.

Les piles P du pont sont munies chacune de plusieurs rainures 2 présentant la forme générale d'un C comme illustré aux figures 4 à 7 s'étendant suivant une ou plusieurs génératrices de la pile. De même le tablier T du pont est muni d'une ou plusieurs rainures 2 présentant la forme générale d'un C.

Ces rainures en forme générale de C 2 stabilisent et maîtrisent le flux d'eau ou d'air circulant autour des piles P et du tablier T du pont et font en sorte que ces éléments sont soumis à de moindres contraintes et efforts pour une vitesse donnée d'écoulement de l'eau et/ou de l'air autour de ceux-ci.

Dans toutes ces applications le dispositif de réduction de la traînée provoque une réduction importante de la traînée de friction et de la traînée totale, résultant de l'inversion du sens de rotation des tourbillons se créant autour du corps immergé dans le fluide, ce qui réduit la vitesse de déplacement relative entre l'objet et le courant de fluide.

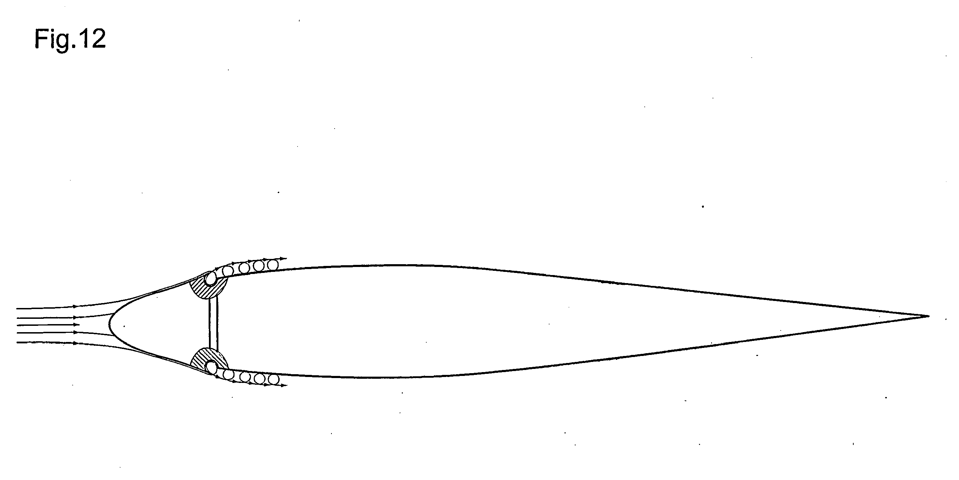

Pour démontrer la faisabilité et l'efficacité du dispositif selon l'invention, des premiers essais ont été effectués sur un corps immergé dans l'eau, corps présentant la forme d'une ogive de 21m de longueur et d'un diamètre maximum de 2,8m (fig. 12). Dans cette figure le dispositif selon l'invention a été exagérément agrandi pour les besoins de l'illustration par rapport aux dimensions de l'ogive.

Dans une première configuration (figure 13) une telle ogive a été munie d'un type de dispositif de réduction de la traînée selon la figure 8, c'est-à-dire un dispositif 2 incorporé dans un élément 6 fixé contre la paroi extérieure de l'ogive. Ce dispositif a été placé à environ 2,6m. de la pointe de l'ogive, soit à une distance d'environ 4,4m de la section maximale de l'ogive. La figure 13 illustre partiellement l'ogive munie de ce dispositif en coupe transversale. Le diamètre de la gorge 2 est dans ce cas de l'ordre de 2,5cm.

Pour un écoulement de l'eau turbulent selon le modèle Spalart-Allmaras (spl) on remarque que la présence du dispositif provoque une légère augmentation de la pression du fluide sur la surface de l'ogive et une diminution importante de la traînée de friction par rapport à un écoulement identique autour de la même ogive sans le dispositif selon l'invention. Les chiffres relevés sont:

| | avec dispositif | sans dispositif | différence |
|---|---|---|---|
| coef. traînée pression | 0.0080 | 0.0026 | |
| coef. traînée friction | 0.0371 | 0.0445 | |
| coef. traînée totale | 0.0451 | 0.0471 | - 4,39 % |

Les mêmes mesures ont été faîtes sur une ogive similaire dans la surface de laquelle le dispositif selon l'invention a été incrusté, c'est-à-dire usiné ou obtenu par moulage (figure 14).

Dans cet exemple, le dispositif a été placé au même endroit de l'ogive que dans l'exemple précédant mais le diamètre de la gorge 2 a été augmenté à 5cm et celle-ci présentait une forme du type de celle illustrée à la figure 7. Les mesures relevées sont :

| | avec dispositif | sans dispositif | différence |
|---|---|---|---|
| coef. traînée pression | 0.0063 | 0.0026 | |
| coef. traînée friction | 0.0378 | 0.0445 | |
| coef. traînée totale | 0.0441 | 0.0471 | - 6,49 % |

Dans les deux cas on obtient une diminution importante de la traînée totale de 4,4% à 6,5% environ avec un seul dispositif placé sur, respectivement intégré dans la surface de l'ogive.

Pour augmenter encore cette réduction de traînée, il est possible de placer plusieurs dispositifs les uns derrières les autres sur la surface de l'ogive. En effet, l'effet d'un dispositif ne se produit que sur une certaine distance en aval de celui-ci de sorte que le phénomène d'inversion du sens de rotation des tourbillons de l'écoulement peut être répété plusieurs fois le long de la surface du corps immergé.

On peut donc admettre que la réduction de la traînée totale sur un corps immergé dans un flux de fluide sera augmentée par l'utilisation de plusieurs dispositifs de réduction de traînée disposés les uns derrière les autres, le long du corps immergé.

Bien entendu, la dimension de la gorge 2, sa forme, sa position par rapport au corps immergé dans un fluide peut modifier son efficacité pour réduire la traînée.

On remarque également une réduction des phénomènes de cavitation par l'utilisation d'un dispositif de réduction de la traînée selon l'invention.

Le dispositif de réduction de traînée selon l'invention peut également être utilisé pour réduire la perte de charge et la cavitation de l'écoulement d'un flux de fluide à l'intérieur d'une tubulure. Ceci peut s'avérer important dans beaucoup de domaines comme dans les conduites forcées, les réseaux de distribution de fluides, les tubulures d'admission ou d'échappement de moteur, les pipelines etc.

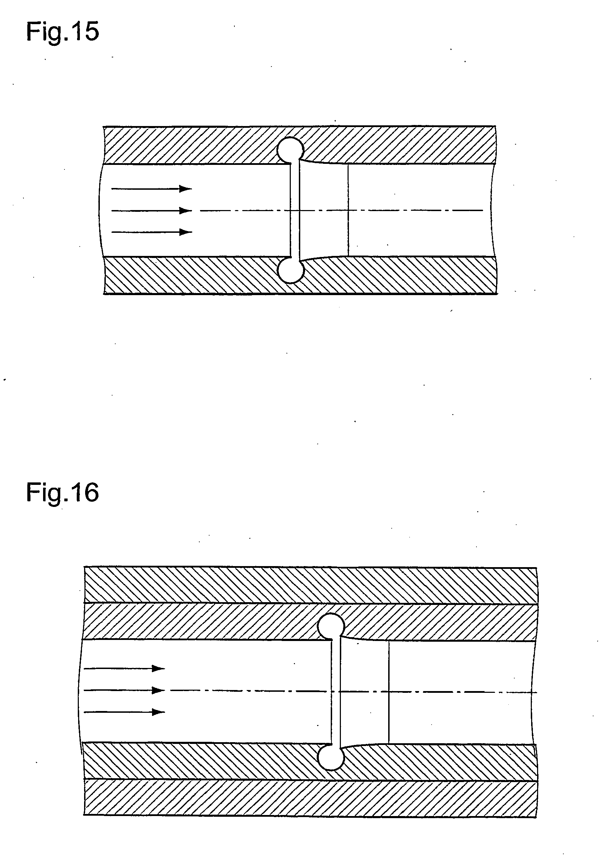

La figure 15 illustre schématiquement en coupe l'utilisation d'un dispositif de réduction de traînée, incrusté ou usiné dans la paroi d'une tubulure.

La figure 16 illustre schématiquement en coupe l'utilisation d'un dispositif de réduction de traînée rapporté sur la paroi interne d'une tubulure.

La figure 17 illustre une portion d'un corps immergé et se déplaçant dans de l'eau comportant le dispositif de réduction de traînée et illustrant les recirculations d'eau induites par ce dispositif.

Dans le cas de tubulure également, dès que l'écoulement de fluide devient turbulent la présence de la gorge 2 du dispositif de réduction de la traînée inverse le sens de rotation des tourbillons de fluide provoquant ainsi une réduction de la vitesse relative entre la tubulure et la couche de fluide qui est en contact avec la paroi de cette tubulure ce qui entraîne une réduction de perte de charge et des phénomènes de cavitation dans la conduite.

Dans le cas de tubulures également, il est possible de disposer des gorges 2 tout au long de la tubulure, espacées d'une distance correspondant à la distance sur laquelle se produit l'effet du dispositif de réduction de perte de charge, pour multiplier l'effet de réduction de frottement de fluide contre la tubulure et augmenter le rendement d'une installation.

Dans le cas de tubulure la gorge 2 est appliquée ou incrustée dans la paroi interne de la tubulure et est de préférence fermée sur elle-même, c'est-à-dire continue puisque le fluide est en contact avec toute la surface interne de la tubulure.

Des essais plus approfondis mais non encore aboutis montrent que la présence d'une gorge 2 dans la surface d'un corps 1, s'étendant perpendiculairement au fluide s'écoulant autour du corps 1 et présentant encore une étendue angulaire supérieure à 180°, provoque une double recirculation du fluide autour du corps 1 dans la zone concernée. On observe une première recirculation 1 en aval de la gorge 2. La couche supérieure, distante du corps 1, de cette première recirculation s'écoule dans le sens de l'écoulement général du fluide autour du corps tandis que la couche inférieure, au contact du corps 1, de cette première recirculation 1 s'effectue dans le sens inverse à l'écoulement général du fluide de sorte que le frottement entre le corps 1 et le fluide dans cette zone de recirculation est réduit. On observe également une seconde recirculation II dans la gorge 2 qui forme un flux fermé sur lui-même à l'intérieur de la gorge.

Dans la zone d'ouverture de la gorge 2 les deux recirculations sont en contact l'une avec l'autre et doivent donc avoir le même sens de rotation, ce qui impose le sens de rotation de la seconde recirculation II, celle qui s'effectue dans la gorge 2 et qui est donc contraire au sens de rotation de la seconde recirculation.

Pour réduire les turbulences dans la zone de rencontre de ces deux recirculations on crée une arête A au bord aval de la gorge 2. En travaillant sur la forme de cette arête A pour diminuer le plus possible la zone de turbulence entre les recirculations I et II on limite l'énergie perdue et diminue la résistance hydrodynamique à la pénétration du corps 1 dans le fluide.

D'une façon générale le dispositif , c'est-à-dire la gorge 2 et l'arrête A influencent la couche limite du fluide s'écoulant autour du corps 1. Dans ces conditions, les dimensions de ces éléments 2 et A sont toujours faibles voire très faibles par rapport à celles du corps 1, par exemple de quelques centimètres alors que celles du corps 1 sont de l'ordre de 20m à 200m.

## Revendications

1. Dispositif réduisant la traînée due au déplacement relatif entre un corps et un fluide comportant, dans ou sur la surface du corps qui se trouve en contact avec le fluide et suivant une ligne continue située sensiblement dans un plan perpendiculaire à l'écoulement du fluide, des moyens provoquant des tourbillons dont le sens de rotation est maîtrisé le long d'une partie au moins de la surface du corps réduisant ainsi les forces de frottement entre le fluide et le corps et donc la traînée à laquelle le corps est soumis, respectivement la perte de charge à laquelle le fluide est soumis; lesdits moyens étant constitués par au moins une gorge (2) pratiquée dans la surface du corps qui est en contact avec le fluide et **caractérisé par** une arête (A) émergeant de la surface du corps (1), qui s'étend parallèlement à la gorge (2), cette arête (A) étant située immédiatement en aval de la gorge (2).

2. Dispositif selon la revendication 1, **caractérisé par le fait que** les moyens sont disposés en amont des zones du corps où se forme normalement une turbulence.

3. Dispositif selon la revendication 1 ou la revendication 2, **caractérisé par le fait que** les moyens sont constitués par au moins une protubérance rapportée sur la surface du corps et en contact avec le fluide, cette protubérance comportant au moins une gorge (2) et une arête (A).

4. Dispositif selon l'une des revendications précédentes, **caractérisé par le fait que** les moyens sont disposés sur la totalité du périmètre de la surface du corps en contact avec le fluide.

5. Dispositif selon la revendication 1, **caractérisé par le fait que** la gorge présente en coupe la forme générale d'un U ou d'un C.

6. Dispositif selon la revendication 5, **caractérisé par le fait que** les bords libres de la gorge se faisant face sont situés dans le prolongement de la surface du corps qui est en contact avec le fluide.

7. Dispositif selon la revendication 6, **caractérisé par le fait que** les bords libres de la gorge se faisant face sont décalés l'un par rapport à l'autre, au moins un de ces bords libres étant décalé par rapport à la surface du corps qui est en contact avec le fluide.

8. Dispositif selon la revendication 1, **caractérisé par le fait qu'**il est constitué par un profilé dont la face inférieure est destinée à être collée sur un corps, ce profilé présentant des bords effilés et une partie centrale épaisse munie d'une gorge (2) et d'une arête (A).

9. Dispositif selon la revendication 8, **caractérisé par le fait que** la gorge pratiquée dans le profilé est conformée selon la revendication 6 ou la revendication 7.

10. Dispositif selon l'une des revendications précédentes, **caractérisé par le fait qu'**il est apposé sur ou incorporé dans la surface extérieure d'un corps immergé totalement ou partiellement dans un fluide.

11. Dispositif selon la revendication 10, **caractérisé par le fait qu'**il est incorporé à un véhicule, train, bateau, voiture, avion ou à une structure fixe, immeuble, pont, éolienne, tour, plate-forme off-shore.

12. Dispositif selon l'une des revendications 1 à 9, **caractérisé par le fait qu'**il est apposé ou incorporé dans la surface intérieure d'une conduite dans laquelle circule un fluide.

13. Dispositif selon la revendication 12, **caractérisé par le fait qu'**il est incorporé à une conduite forcée, une tubulure d'admission ou d'échappement d'un moteur, à un conduit de distribution d'un fluide.

14. Dispositif selon la revendication 10, **caractérisé par le fait que** la section droite de la gorge (2) présente une étendue angulaire de plus de 180°; qu'elle s'étend sur la totalité de la surface du corps (1) en contact avec le fluide, sensiblement perpendiculairement à l'écoulement de fluide.

15. Dispositif selon l'une des revendications 1 à 14, **caractérisé par le fait que** sa présence impose une seconde recirculation (II) du fluide à l'intérieur de la gorge (2) et une première recirculation (I) en aval de la gorge (2), le sens de rotation de la seconde recirculation étant tel que sa couche supérieure, éloignée du corps, s'écoule dans le sens de l'écoulement général du fluide alors que sa couche inférieure, en contact avec le corps (1) s'écoule dans le sens inverse et que le sens de la seconde recirculation (II) est imposé par celui de la première recirculation (I) du fait que dans la zone correspondant à l'ouverture de la gorge (2) ces deux recirculations (I,II) sont en contact l'une avec l'autre.

16. Véhicule terrestre, nautique ou aéronautique équipé d'un dispositif selon l'une des revendications 1 à 9.

17. Conduite ou tubulure équipée d'un dispositif selon l'une des revendications 1 à 9.

18. Structure fixe ou ouvrage étant équipé d'un dispositif selon l'une des revendications 1 à 9.

## Claims

1. Device reducing the drag due to the relative movements of a body and a fluid, comprising in or on the surface of the body that is in contact with the fluid, and following a continuous line located essentially in a plane perpendicular to the fluid flow, means producing eddies the direction of rotation of which is controlled along at least part of the surface of the body, thus reducing the frictional forces between the fluid and the body, and hence the drag to which the body is subjected, or the head loss to which the fluid is subjected, the said means being constituted by at least one groove (2) produced in the body surface that is in contact with the fluid and **characterized in that** directly downstream of groove (2) a ridge (A) emerges from the surface of body (1) and extends parallel to groove (2).

2. Device according to claim 1, **characterized in that** the means are arranged upstream from the body regions where turbulence normally develops.

3. Device according to claim 1 or claim 2, **characterized in that** the means consist of at least one bulge attached to the body surface and in contact with the fluid, this bulge having at least one groove.

4. Device according to one of the preceding claims, **characterized in that** the means are arranged over the entire perimeter of the body surface in contact with the fluid.

5. Device according to claim 1, **characterized in that** the groove in cross section has the general shape of a U or C.

6. Device according to claim 5, **characterized in that** the free edges of the groove that face each other are situated in the extension of the body surface in contact with the fluid.

7. Device according to claim 6, **characterized in that** the free edges of the groove that face each other are offset relative to one another, at least one of these free edges being offset relative to the body surface in contact with the fluid

8. Device according to claim 1, **characterized in that** it consists of a profile the underside of which is intended to be glued to a body, this profile having tapering edges and a thick central segment provided with a groove.

9. Device according to claim 8, **characterized in that** the groove produced in the profile is shaped in accordance with claim 6 or claim 7.

10. Device according to one of the preceding claims, **characterized in that** the means produce control of the fluid eddies along at least one part of the body surface in contact with the fluid.

11. Device according to claim 10, **characterized in that** it is incorporated into a vehicle, train, ship, car, plane or a fixed structure, building, bridge, wind turbine, tower, or off-shore platform.

12. Device according to one of claims 1 to 9, **characterized in that** it is attached to or incorporated into the inner surface of a channel in which a fluid circulates.

13. Device according to claim 12, **characterized in that** it is incorporated into a pressure pipe, an engine intake or exhaust manifold, or a fluid distribution pipe.

14. Device according to claim 10, **characterized in that** the cross section of groove (2) stretches over an angle of more than 180°; that it extends over the entire surface of body (1) that is in contact with the fluid, essentially perpendicularly to the fluid flow.

15. Device according to one of claims 1 to 14, **characterized in that** its presence gives rise to a second recirculation (II) of the fluid inside of groove (2) and to a first recirculation (I) downstream of groove (2), the direction of rotation of the second recirculation being such that its upper layer that is at a distance from the body flows in the direction of general fluid flow while its lower layer in contact with body (1) flows in the opposite direction, and that the direction of the second recirculation (II) is imposed by that of the first recirculation (I), since in the region corresponding to the opening of groove (2), the two recirculations (I, II) are in mutual contact.

16. Terestrial, nautical or aeronautic vehicle fitted with the device of one of claims 1 to 9.

17. Pipe or duct fitted with a device according to one of claims 1 to 9.

18. Fixed structure or constructive works fitted with a device according to one of claims 1 to 9.

## Patentansprüche

1. Vorrichtung, die den Widerstand auf Grund der relativen Verschiebung zwischen einem Körper und einem Fluid verringert, umfassend in oder auf der Fläche des Körpers, die sich mit dem Fluid in Kontakt befindet, und entlang einer kontinuierlichen Linie, die sich im Wesentlichen in einer Ebene senkrecht auf die Fließrichtung des Fluids befindet, Mittel, die Wirbel hervorrufen, deren Drehrichtung entlang mindestens eines Teiles der Fläche des Körpers gesteuert wird, wodurch die Reibungskräfte zwischen dem Fluid und dem Körper und somit der Widerstand, dem der Körper ausgesetzt ist, bzw. der Lastverlust, dem das Fluid ausgesetzt ist, verringert werden, wobei die Mittel von mindestens einer Rille (2) gebildet sind, die in der Fläche des Körpers, die mit dem Fluid in Kontakt ist, gebildet sind, **gekennzeichnet durch** eine Kante (A), die aus der Fläche des Körpers (1) emporragt und sich parallel zur Rille (2) erstreckt, wobei diese Kante (A) unmittelbar stromabwärts zur Rille (2) angeordnet ist.

2. Vorrichtung nach Anspruch 1, **dadurch gekennzeichnet, dass** die Mittel stromaufwärts zu den Zonen des Körpers angeordnet sind, in denen normalerweise ein Wirbel entsteht.

3. Vorrichtung nach Anspruch 1 oder Anspruch 2, **dadurch gekennzeichnet, dass** die Mittel von mindestens einer Ausstülpung gebildet sind, die auf die Fläche des Körpers aufgesetzt und mit dem Fluid in Kontakt ist, wobei diese Ausstülpung mindestens eine Rille (2) und eine Kante (A) umfasst.

4. Vorrichtung nach einem der vorhergehenden Ansprüche, **dadurch gekennzeichnet, dass** die Mittel auf dem gesamten Umfang der mit dem Fluid in Kontakt befindlichen Fläche des Körpers angeordnet sind.

5. Vorrichtung nach Anspruch 1, **dadurch gekennzeichnet, dass** die Rille im Querschnitt die allgemeine Form eines U oder C aufweist.

6. Vorrichtung nach Anspruch 5, **dadurch gekennzeichnet, dass** die freien Ränder der Rille, die einander gegenüber liegen, in der Verlängerung der Fläche des Körpers, die mit dem Fluid in Kontakt ist, angeordnet sind.

7. Vorrichtung nach Anspruch 6, **dadurch gekennzeichnet, dass** die freien Ränder der Rille, die einander gegenüber liegen, zueinander versetzt sind, wobei mindestens einer dieser freien Ränder in Bezug zur Fläche des Körpers, die mit dem Fluid in Kontakt ist, versetzt ist.

8. Vorrichtung nach Anspruch 1, **dadurch gekennzeichnet, dass** sie von einem Profil gebildet ist, dessen Innenseite dazu bestimmt ist, auf einen Körper geklebt zu werden, wobei dieses Profil konisch zulaufende Ränder und einen dicken Mittelteil, der mit einer Rille (2) und einer Kante (A) versehen ist, aufweist.

9. Vorrichtung nach Anspruch 8, **dadurch gekennzeichnet, dass** die in dem Profil vorgesehene Rille dem Anspruch 6 oder dem Anspruch 7 entspricht.

10. Vorrichtung nach einem der vorhergehenden Ansprüche, **dadurch gekennzeichnet, dass** sie auf die Außenfläche eines zur Gänze oder teilweise in ein Fluid getauchten Körpers aufgesetzt oder in diese integriert wird.

11. Vorrichtung nach Anspruch 10, **dadurch gekennzeichnet, dass** sie in ein Fahrzeug, einen Zug, ein Schiff, ein Auto, ein Flugzeug oder eine feste Struktur, ein Gebäude, eine Brücke, ein Windrad, einen Turm, eine Off-Shore-Plattform integriert ist.

12. Vorrichtung nach einem der Ansprüche 1 bis 9, **dadurch gekennzeichnet, dass** sie auf die Innenseite einer Leitung, in der ein Fluid zirkuliert, aufgesetzt oder in diese integriert ist.

13. Vorrichtung nach Anspruch 12, **dadurch gekennzeichnet, dass** sie in eine Druckleitung, ein Zuleitungs- oder Auspuffrohr eines Motors, eine Leitung zur Verteilung eines Fluids integriert ist.

14. Vorrichtung nach Anspruch 10, **dadurch gekennzeichnet, dass** der Querschnitt der Rille (2) ein Winkelausmaß von mehr als 180° aufweist, dass er sich über die Gesamtheit der mit dem Fluid in Kontakt befindlichen Fläche des Körpers (1) im Wesentlichen senkrecht auf die Fließrichtung des Fluids erstreckt.

15. Vorrichtung nach einem der Ansprüche 1 bis 14, **dadurch gekennzeichnet, dass** ihr Vorhandensein eine zweite Rückzirkulation (II) des Fluids in das Innere der Rille (2) und eine erste Rückzirkulation (I) stromabwärts zur Rille (2) vorgibt, wobei die Drehrichtung der zweiten Rückzirkulation derart ist, dass seine obere Schicht, die vom Körper entfernt ist, in die Richtung der allgemeinen Fließrichtung des Fluids fließt, während seine untere Schicht, die mit dem Körper (1) in Kontakt ist, in die umgekehrte Richtung fließt, und dass die Richtung der zweiten Rückzirkulation (II) durch jene der ersten Rückzirkulation (I) auf Grund der Tatsache bestimmt wird, dass in der der Öffnung der Rille (2) entsprechenden Zone diese beiden Rückzirkulationen (I, II) miteinander in Kontakt sind.

16. Land-, See- oder Luftfahrzeug, das mit einer vorrichtung nach einem der Ansprüche 1 bis 9 ausgestattet ist.

17. Leitung oder Rohr, die mit einer Vorrichtung nach einem der Ansprüche 1 bis 9 ausgestattet sind.

18. Feste Struktur oder Bauwerk, die mit einer Vorrichtung nach einem der Ansprüche 1 bis 9 ausgestattet sind.
